# FASCICULE DE BREVET EUROPEEN

(11) **EP 3 212 504 B1**
(45) Date de publication et mention de la délivrance du brevet: **22.11.2017**
(21) Numéro de dépôt: 15821121.9
(22) Date de dépôt: 15.12.2015
(51) Int. Cl.: B64G 1/50

(54) **ENGIN SPATIAL**
RAUMFAHRZEUG
SPACECRAFT

(30) Priorité: 18.12.2014 FR 1462687
(43) Date de publication de la demande: 06.09.2017
(73) Titulaire: Airbus Defence and Space SAS, 78130 Les Mureaux (FR)
(72) Inventeur: MENA, Fabrice, 81500 Teulat (FR)
(74) Mandataire: Cabinet Plasseraud
(86) Numéro de dépôt international: PCT/FR2015/053504
(87) Numéro de publication internationale: WO 2016/097577

(56) Documents cités:
- EP-A2- 1 006 769
- US-A- 5 332 030
- US-B1- 6 776 220

## Description

La présente invention concerne un engin spatial et en particulier un satellite géostationnaire.

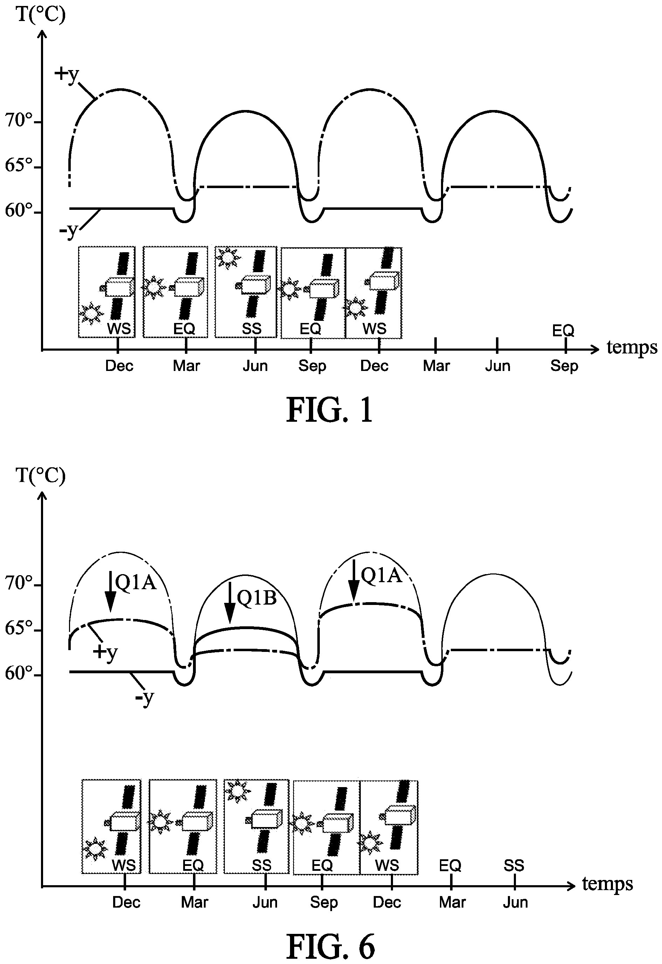

En raison du mouvement de révolution de la terre autour du soleil, les différentes faces d'un satellite géostationnaire ne reçoivent pas la même quantité de rayonnement solaire au cours des saisons. Il en résulte des différences significatives de températures entre les faces +Y et -Y du satellite ainsi que des variations cycliques de ces températures au cours des saisons. Ainsi, comme visible sur la figure 1, au cours du solstice d'hiver (WS), la face +Y, exposée aux rayonnements solaires, présente des températures plus élevées que la face -Y située à l'ombre. Au cours du solstice d'été (SS), c'est la face -Y qui présente des températures élevées car c'est elle qui est exposée aux rayonnements solaires tandis que la face +Y est à l'ombre. Durant les équinoxes d'hiver et d'été (EQ), les faces -Y et + Y présentent des températures moins élevées que durant les solstices d'hiver (WS) et d'été (SS).

Ces écarts de température entre la face +Y et la face -Y ainsi que les fluctuations de température au cours des saisons, sont contraignantes pour le satellite et pour sa charge utile.

Pour diminuer ces écarts de température, divers systèmes palliatifs ont déjà été mis en place. Toutefois, ces systèmes palliatifs ne sont pas totalement satisfaisants.

La demande de brevet US 6,776,220 divulgue par exemple des caloducs agencés entre le radiateur fixé sur la face +Y et le radiateur fixé sur la face -Y. Ces caloducs permettent de transférer une fraction de la chaleur en excédant d'un radiateur situé du côté du soleil vers un radiateur situé à l'ombre. Toutefois, malgré la présence de ces caloducs, les écarts de température entre la face +Y et la face -Y restent importants surtout au cours des solstices d'été et d'hiver au cours desquels ils peuvent encore atteindre environ 10°C à 15°C, puisque le radiateur situé à l'ombre est déjà hautement sollicité par les dissipations des équipements électroniques qu'il refroidit. Le radiateur situé à l'ombre ne peut donc recevoir qu'une faible quantité de chaleur excédentaire du radiateur situé au soleil.

Contrairement à la demande de brevet US 6,776,220, la présente invention fait appel à un radiateur auxiliaire qui n'est pas en échange thermique direct avec des équipements électroniques. Ce radiateur auxiliaire est de plus situé à l'ombre lorsque le radiateur du mur opposé est situé du côté du soleil. Le radiateur auxiliaire selon la présente invention peut ainsi recevoir une grande quantité de chaleur du radiateur situé au soleil de façon à abaisser les écarts de température entre les murs +Y et -Y.

Enfin, cet équilibre de chaleur est obtenu avec l'installation d'un système de transport d'énergie thermique tel que la LHP ou la MPL qui, contrairement à la demande de brevet US 6,776,220, ne nécessite que l'installation de deux tuyaux entre les deux radiateurs, au lieu d'un certain nombre relativement élevé de caloducs dont la masse totale est importante.

Des chaufferettes électriques ont également été utilisées pour réchauffer les faces du satellite situées du côté ombre. Néanmoins, les chaufferettes présentent une efficacité limitée et requiert de sur-dimensionner le système de puissance électrique du satellite. Ce surdimensionnement augmente considérablement le coût du système de puissance électrique. De plus, le réchauffage des parties froides du satellite occasionne également une augmentation de la température des parties chaudes de celui-ci. Or, ces parties chaudes sont déjà proches de leur température de limite de fonctionnement.

Par ailleurs, ces écarts de températures entre les faces du satellite doivent être reproduits lors des tests de qualification du satellite. La mise en oeuvre de ces écarts thermiques et leur fluctuation trimestrielle dans une atmosphère sous vide est complexe.

Le but de la présente invention est de limiter les écarts de température entre les faces +Y et -Y et de réduire, pour une même face, les variations de température au cours des saisons.

A cet effet, l'invention a pour objet un engin spatial comprenant :
- un boitier délimitant un espace intérieur et un espace extérieur, le boitier ayant une première face et une seconde face opposée à la première face,
- un premier radiateur et un second radiateur portés par la première face et respectivement la seconde face, le premier radiateur et le second radiateur comportant chacun une face principale interne, une face principale externe opposée à la face principale interne et des faces latérales,
caractérisé en ce que l'engin spatial comporte en outre un premier radiateur auxiliaire et un premier dispositif de transfert thermique auxiliaire reliant thermiquement ledit premier radiateur auxiliaire à la face principale interne du second radiateur, le premier radiateur auxiliaire étant agencé dans une première portion de l'espace extérieur, ladite première portion étant délimitée par la face principale externe du premier radiateur et par des premiers plans contenant les faces latérales du premier radiateur.

Avantageusement, l'ensemble premier dispositif de transfert thermique et premier radiateur auxiliaire permettent de refroidir le second radiateur lorsque celui-ci est exposé aux rayonnements solaires, c'est-à-dire lors des solstices d'hiver et solstice d'été. Le refroidissement du second radiateur permet un refroidissement plus efficace des équipements électroniques.

Avantageusement, la diminution des variations de température des faces de l'engin spatial devrait permettre de réduire la durée des tests de qualification en vide thermique. Il en résulterait un gain significatif en termes de coût et de durée de conception d'un engin spatial.

Avantageusement, l'ensemble premier dispositif de transfert thermique auxiliaire et premier radiateur auxiliaire peuvent être facilement montés et démontés sur un engin spatial au cours de la conception ou être ajouté à un engin spatial déjà existant. L'ajout de cet ensemble ne nécessite pas de modifier l'architecture de l'engin spatial déjà existant.

Avantageusement, l'ensemble premier dispositif de transfert thermique et premier radiateur auxiliaire présente un encombrement faible. Cet ensemble permet d'augmenter la capacité de réjection thermique de l'engin spatial sans augmenter la taille des premier et second radiateurs.

Avantageusement, l'ensemble premier dispositif de transfert thermique et premier radiateur auxiliaire présente une masse et un coût faibles.

Suivant des modes particuliers de réalisation, l'engin spatial comporte une ou plusieurs des caractéristiques suivantes :
- ledit premier radiateur auxiliaire est isolé thermiquement du premier radiateur ;
- l'engin spatial comporte un second radiateur auxiliaire et un second dispositif de transfert thermique auxiliaire reliant thermiquement ledit second radiateur auxiliaire à la face principale interne du premier radiateur ; ledit second radiateur auxiliaire étant agencé dans une seconde portion d'espace extérieur délimitée par la face principale externe du second radiateur et par des seconds plans contenant les faces latérales du second radiateur, et dans lequel le premier dispositif de transfert thermique auxiliaire et le second dispositif de transfert thermique auxiliaire sont réversibles.

Avantageusement, l'utilisation d'un second radiateur auxiliaire et de deux dispositifs de transfert thermique réversibles permet en outre de réchauffer la première face de l'engin spatial, lorsque la seconde face est exposée aux rayonnements solaires. Ainsi, la première face est soumise à des variations de température moins importantes entre le solstice d'hiver et le solstice d'été.
- l'un au moins parmi le premier radiateur auxiliaire et le deuxième radiateur auxiliaire, est recouvert d'un revêtement à forte absorptivité solaire et forte émissivité infra-rouge, par exemple de la peinture noire.
- l'un au moins parmi le premier radiateur auxiliaire et le deuxième radiateur auxiliaire comprend au moins une face radiative principale qui s'étend selon une direction perpendiculaire à la face principale externe du premier radiateur.

Un tel agencement permet d'augmenter la surface radiative globale de l'engin spatial. Cet agencement ne réduit que de très peu la surface radiative et l'efficacité des premier et second radiateurs.
- le premier radiateur auxiliaire comprend au moins deux plaques qui se croisent.
   Ce mode de réalisation permet de réduire la surface radiative du second radiateur occulté par le premier radiateur auxiliaire. Ce mode de réalisation permet d'offrir toujours la même surface exposée au soleil lorsque le soleil tourne autour du radiateur auxiliaire au cours d'une journée.
- le premier radiateur auxiliaire présente la forme générale d'une section de cylindrique ouverte à chacune de ses extrémités.
- le premier radiateur auxiliaire (présente la forme générale d'un parallélépipède ouvert à chacune de ses extrémités.

Lorsque les premier et second dispositifs de transfert thermique auxiliaires sont réversibles, les agencements décrits ci-dessus permettent d'avoir tout au long de la journée au moins une partie du radiateur auxiliaire exposée au soleil. Ainsi, les variations de rayonnements solaires liées au mouvement orbital sont compensées au cours d'une période de vingt-quatre heures.
- le premier dispositif de transfert thermique est non réversible.
- le premier radiateur auxiliaire est réalisé dans un matériau flexible.
- le premier radiateur auxiliaire est réalisé en graphoil.

L'invention sera mieux comprise à la lecture de la description qui va suivre, donnée uniquement à titre d'exemple et faîte en se référant aux dessins, sur lesquels :
- la figure 1 sont deux courbes représentatives des variations de température des faces + Y et -Y d'un engin spatial selon l'état de la technique au cours d'une année ;
- la figure 2 est une vue schématique de l'engin spatial selon l'invention en orbite géostationnaire ;
- la figure 3 est une vue en perspective schématique d'un premier mode de réalisation de l'engin spatial selon l'invention, au cours de l'équinoxe ;
- la figure 4 est une vue en perspective schématique de l'engin spatial illustré sur la figure 3, au moment du solstice d'hiver ;
- la figure 5 est une vue en perspective schématique de l'engin spatial illustré sur la figure 3, au moment du solstice d'été ;
- la figure 6 est deux courbes représentatives des variations de température des faces + Y et -Y de engin spatial illustré sur la figure 3, au cours d'une année ;
- la figure 7 est une vue de face simplifiée de l'engin spatial illustré sur les figures 3 à 5 ;

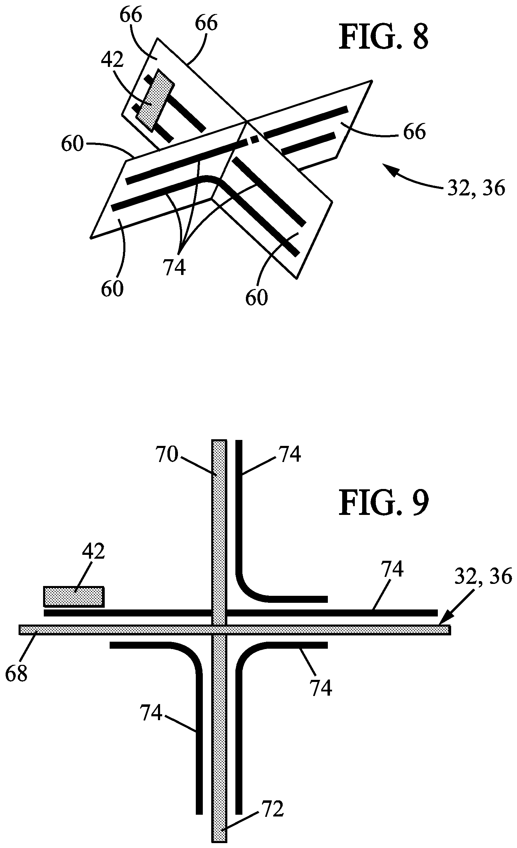

- la figure 8 est une vue en perspective schématique d'un radiateur auxiliaire selon l'invention ;
- la figure 9 est une vue schématique de face du radiateur auxiliaire illustré sur la figure 8 ;
- la figure 10 est une vue en perspective schématique d'un second mode de réalisation de l'engin spatial selon l'invention, au cours du solstice d'hiver ;
- la figure 11 est une vue en perspective schématique de l'engin spatial illustré sur la figure 10, au cours du solstice d'été ; et
- la figure 12 est deux courbes représentatives des variations de température des faces + Y et -Y de engin spatial illustré sur la figure 11 au cours d'une année.

Sur les différentes figures, les mêmes références désignent des éléments identiques ou similaires.

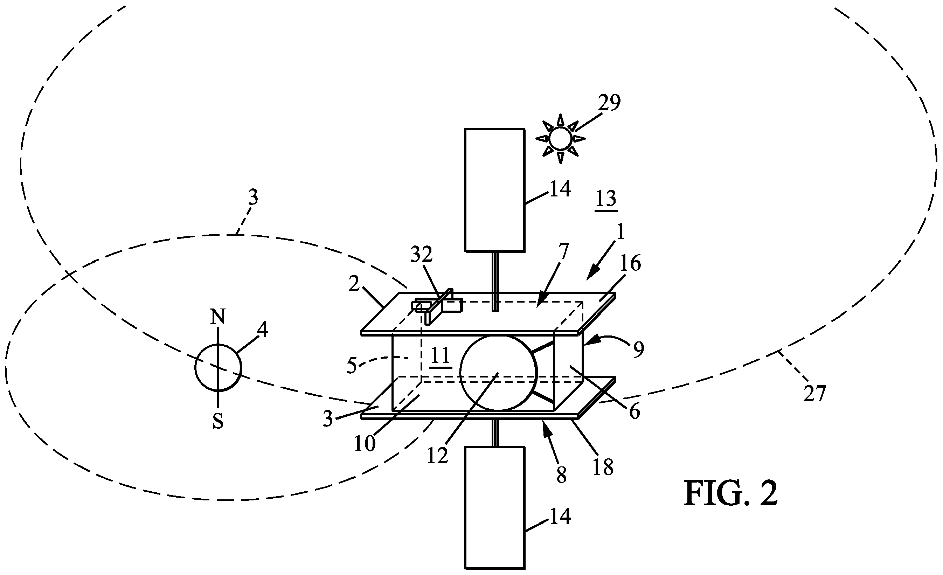

En référence à la figure 2, un engin spatial 1 du type satellite géostationnaire est propre à tourner sur une orbite 3 autour de la Terre 4, la Terre 4 tournant elle-même sur une orbite 27 autour du Soleil 29.

L'engin spatial 1 se présente sous la forme d'un boîtier 2 parallélépipédique délimitant un espace intérieur 11 et un espace extérieur 13. Ce boîtier 2 présente toujours la même face dirigée vers la Terre, cette face étant appelée la face Terre 5. La face opposée et parallèle à la face Terre 5 est quant à elle appelée la face anti- Terre 6.

La face - X, aussi appelée face Est 9, et la face +X, aussi appelée face Ouest 10, sont des faces opposées, parallèles entre elles et perpendiculaires à la direction de déplacement de l'engin spatial 1. Des antennes de communication 12 sont généralement fixées sur les faces -X 9 et +X 10.

La face -Y, aussi appelée face Nord 7, et la face + Y, aussi appelée face Sud 8, sont deux autres faces du boîtier. Elles sont opposées, parallèles entre elles et perpendiculaires à l'axe Nord-Sud de la Terre 4. Pour des besoins de simplification de la description, les faces -Y et +Y seront désignées par la suite par les termes première face 7 et respectivement seconde face 8.

Des panneaux solaires 14 sont fixés sur les première 7 et seconde 8 faces. Enfin, un premier radiateur principal 16, généralement appelé radiateur Nord, est fixé à et s'étend sur la première face 7. Un second radiateur principal 18, généralement appelé radiateur Sud, est fixé à et s'étend sur la deuxième face 8.

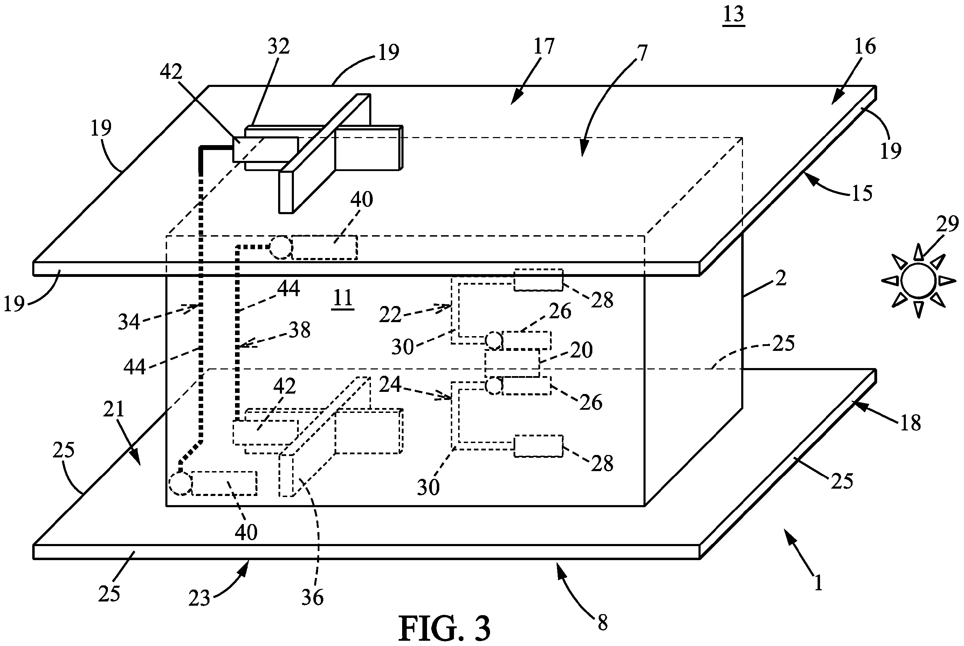

En référence à la figure 3, le premier 16 et le second 18 radiateurs ont une forme générale parallélépipédique. Ils présentent chacun quatre faces latérales 19, 25, une face principale interne 15, 21 fixée au boîtier 2, une face principale externe 17,23 opposée à la face principale interne et située du côté de l'espace extérieur 13.

L'engin spatial 1 transporte des équipements électroniques 20 ainsi qu'un premier 22 et un second 24 dispositifs de transfert thermique principaux propres à refroidir les équipements électroniques 20. Les équipements électroniques comprennent de façon classique des équipements de radiofréquences, des équipements électroniques, des instruments de mesure, des unités de calcul et des batteries. Le premier dispositif de transfert thermique principal 22 relie thermiquement les équipements électroniques 20 au premier radiateur 16. Le second dispositif de transfert thermique principal 24 relie thermiquement les équipements électroniques 20 au second radiateur 18.

De façon classique, les premier 22 et second 24 dispositifs de transfert thermique principaux comprennent chacun un évaporateur 26 en contact thermique avec des équipements électroniques 20, un condenseur 28 en contact thermique avec le premier radiateur 16 et respectivement le second radiateur 18, et des conduites 30 de transport d'un fluide caloporteur reliant l'évaporateur 26 au condenseur 28. Par convention, les évaporateurs sont schématisés sur les figures par un ensemble cercle et rectangle et les condenseurs par un rectangle. Ces dispositifs de transfert thermique principaux 22 et 24 peuvent être classiquement des caloducs (en l'anglais « Heat Pipes ») ou des boucles fluides capillaires dans lesquelles le réservoir à fluide est intégré dans l'évaporateur (en l'anglais « Loop Heat Pipe »).

Selon l'invention, l'engin spatial 1 comporte en outre un premier radiateur auxiliaire 32 fixé au premier radiateur 16, un premier dispositif de transfert thermique auxiliaire 34 propre à transférer de la chaleur du premier radiateur auxiliaire 32 à la face interne 21 du second radiateur, un second radiateur auxiliaire 36 fixé au second radiateur 18, et un second dispositif de transfert thermique auxiliaire 38 propre à transférer de la chaleur du second radiateur auxiliaire 36 à la face interne15 du premier radiateur.

Le premier 34 et le second 38 dispositifs de transfert thermique auxiliaires sont identiques. Ils sont non réversibles, c'est-à-dire qu'ils sont mono-directionnels. Ils comprennent chacun un évaporateur 40, un condenseur 42 et des tuyauteries 44 (reliant thermiquement l'évaporateur 40 au condenseur 42. Préférentiellement, il s'agira d'une boucle à pompage capillaire (en anglais « Capillary Driven Loop/CDL ») et en particulier d'une boucle fluide capillaire dans laquelle le réservoir à fluide est intégré dans l'évaporateur (en l'anglais « Loop Heat Pipe »), Ces dispositifs sont bien connus de l'homme du métier. On se référera notamment à la norme ECSS-E-ST-31-02C du 12/12 2012.

L'évaporateur 40 du premier dispositif de transfert thermique auxiliaire est en contact thermique avec la face principale interne 21 du second radiateur 18. L'évaporateur 40 du second dispositif de transfert thermique auxiliaire est quant à lui en contact thermique avec la face principale interne 15 du premier radiateur. Le condenseur 42 du premier dispositif de transfert thermique auxiliaire est en contact thermique avec le premier radiateur auxiliaire 32. Le condenseur 42 du second dispositif de transfert thermique auxiliaire est en contact thermique avec le second radiateur auxiliaire 36.

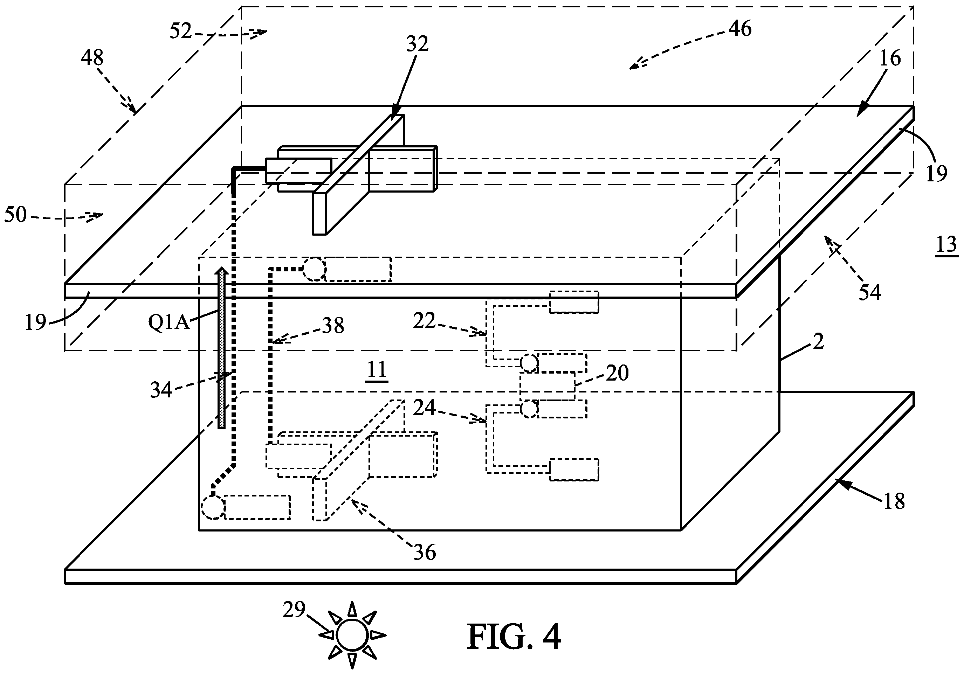

Le premier radiateur auxiliaire 32 et le premier dispositif de transfert thermique auxiliaire 34 permettent de refroidir le second radiateur 18 lorsque celui-ci est exposé aux rayonnements solaires, c'est-à-dire lors du solstice d'hiver (WS). En effet, comme visible sur la figure 4, lors du solstice d'hiver, le second radiateur 18 est exposé aux rayonnements solaires tandis que le premier radiateur auxiliaire 32 est situé dans l'ombre du boîtier du satellite. La différence de température entre le second radiateur 18 et le premier radiateur auxiliaire 32 engendre un transfert d'une partie Q1A de chaleur du second radiateur 18 vers le premier radiateur auxiliaire 32 par l'intermédiaire du premier dispositif de transfert thermique auxiliaire 34. Cette partie Q1A de chaleur est évacuée vers l'espace extérieur 13 par le premier radiateur auxiliaire 32.

En conséquence, comme visible sur la figure 6, la température de la seconde face (face +Y) diminue au cours du solstice d'hiver, réduisant l'écart de température entre les première et seconde faces.

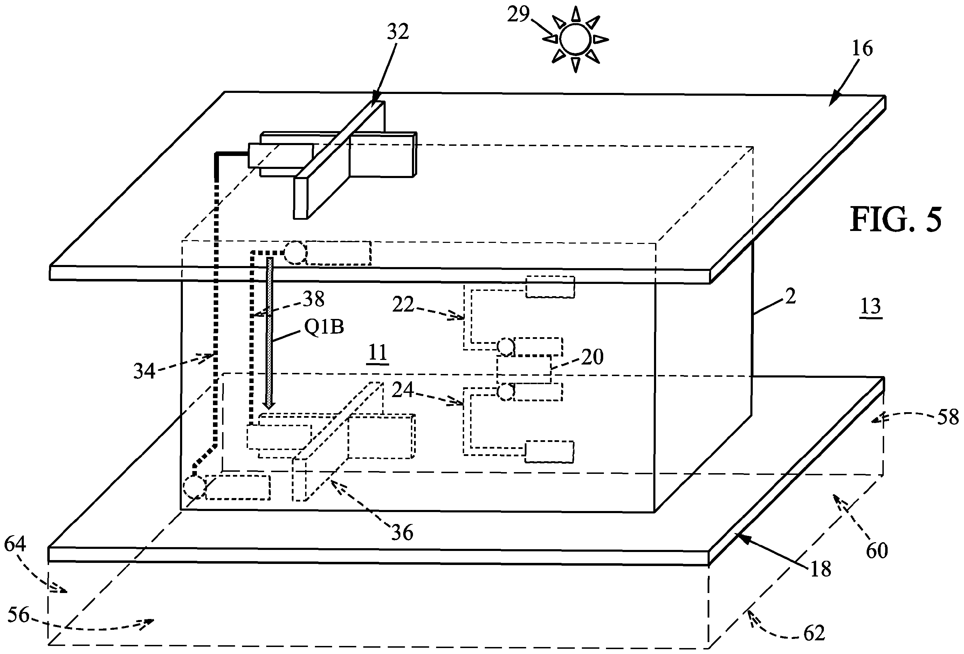

De la même façon, le second radiateur auxiliaire 36 et le second dispositif de transfert thermique auxiliaire 38 permettent de refroidir le premier radiateur 16 lorsque celui-ci est exposé aux rayonnements solaires, c'est-à-dire lors du solstice d'été (SS). Comme visible sur la figure 5, lors du solstice d'été, le premier radiateur 16 est exposé aux rayonnements solaires tandis que le second radiateur auxiliaire 36 est situé dans l'ombre du boîtier du satellite. La différence de température entre le premier radiateur 16 et le second radiateur auxiliaire 36 engendre le transfert d'une partie Q1B de chaleur du premier radiateur 16 vers le second radiateur auxiliaire 36 par l'intermédiaire du second dispositif de transfert thermique auxiliaire 38. Cette partie Q1B de la chaleur est évacuée par le second radiateur auxiliaire 36 qui est situé du côté ombre au cours du solstice d'été.

Ainsi, comme visible sur la figure 6, la température de la première face (face -Y) diminue, au cours du solstice d'été, réduisant l'écart de température entre les première et seconde faces.

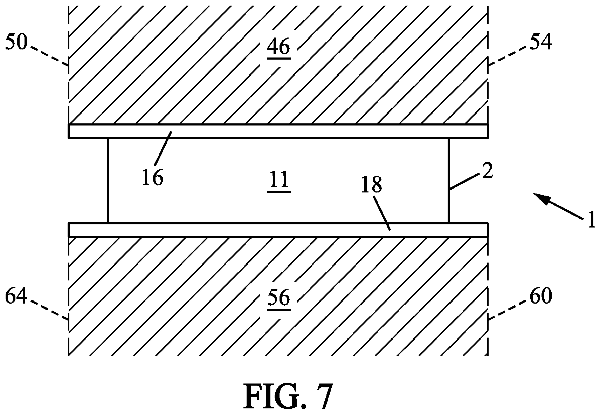

Afin de permettre ce transfert de chaleur, les premier 32 et second 36 radiateurs auxiliaires sont chacun disposés dans l'ombre du premier radiateur et respectivement du second radiateur au cours d'un solstice. Ainsi, le premier radiateur auxiliaire 32 est disposé dans le prolongement du premier radiateur 16, selon une direction perpendiculaire à la première face 7 du premier radiateur 16. Il s'étend dans une première portion 46 de l'espace extérieur 13 qui est située à l'ombre au cours du solstice d'hiver. Cette première portion 46 est délimitée par la face principale externe 17 du premier radiateur et par quatre plans 48, 50, 52, 54 contenant chacun une face latérale 19 du premier radiateur, comme représenté schématiquement sur les figures 4 et 7.

De la même façon, le second radiateur auxiliaire 36 est disposé dans le prolongement du second radiateur 18, selon une direction perpendiculaire à la face Y du second radiateur 18. Il s'étend dans une seconde portion 56 de l'espace extérieur 13 qui est située à l'ombre au cours du solstice d'été. Cette seconde portion 56 est délimitée par la face principale externe 23 du second radiateur et par quatre plans 58, 60, 62, 64 contenant chacun une face latérale 25 du second radiateur comme représenté schématiquement sur les figures 5 et 7.

Le premier 32 et le second 36 radiateurs auxiliaires sont, par exemple, agencés au-dessus des panneaux solaires 14 lorsque ces derniers sont repliés en configuration de lancement. Ils présentent une dimension faible selon la direction normale aux première 7 et seconde 8 faces car ils doivent pouvoir se loger dans l'espace sous coiffe du lanceur.

Les premier 32 et second 36 radiateurs auxiliaires sont préférentiellement isolés thermiquement des premier 16 et second 18 radiateurs qui les supportent. Cette isolation thermique est, par exemple réalisée en plaçant des rondelles en plastique dans les pieds de fixation des radiateurs auxiliaires 32, 36 aux radiateurs principaux 16, 18.

Avantageusement, cette isolation thermique permet d'augmenter considérablement l'efficacité des radiateurs auxiliaires 32, 36. En effet, comme visible sur la figure 1, le premier radiateur 16 et le second radiateur 18 présentent, même lorsqu'ils sont à l'ombre, une température avoisinant les 60 °C. Comme les radiateurs auxiliaires 32, 36 sont isolés des radiateurs principaux 16, 18, ils présentent une température beaucoup plus faible que la température du radiateur fixé sur la face opposée du boîtier 2 de sorte qu'ils sont capables d'absorber de manière efficace une grande quantité de chaleur provenant de ce radiateur. Ainsi, malgré leur petite taille, ils permettent d'évacuer efficacement la chaleur reçue.

Selon un exemple de réalisation représenté, le premier radiateur auxiliaire 32 présente la forme générale d'une croix. Il est formé d'une plaque rectangulaire principale 68 et de deux plaques secondaires 70, 72 fixés de part et d'autre de la plaque principale 68.

Des caloducs 74 s'étendent sur les faces de la plaque principale 68 et sur les faces des plaques secondaires 70,72. Le condenseur 42 est fixé sur une face de la plaque principale 68. Il est en contact thermique avec les caloducs 74. Les caloducs 74 permettent ainsi de répartir uniformément sur l'ensemble du radiateur auxiliaire 32, la chaleur provenant du condensateur 42. Cette chaleur est ensuite rayonnée vers l'espace extérieur 13.

Le second radiateur auxiliaire 36 est identique au premier radiateur auxiliaire et ne sera pas décrit une seconde fois.

En variante, le premier radiateur auxiliaire 32 peut présenter la forme générale d'une étoile ayant un nombre quelconque de branches tel que par exemple trois branches, cinq ou six branches.

Les plaques principales 68 et secondaires 70, 72 sont avantageusement réalisées dans un matériau souple, tel que par exemple du graphoil.. Dans ce cas, les caloducs 74 permettent de rigidifier les plaques 68, 70, 72 constitutives de l'évaporateur 42.

En variante, les plaques principales 68 et secondaires 70, 72 sont réalisées en aluminium.

Selon une variante non représentée, le premier radiateur auxiliaire 32 présente la forme générale d'une section de cylindrique ouverte à chacune de ses extrémités.

Selon autre une variante non représentée, le premier radiateur auxiliaire 32 présente la forme générale d'un parallélépipède ouvert à chacune de ses extrémités.

Dans l'ensemble de ces modes de réalisation, les premier 32 et second 36 radiateurs auxiliaires ont avantageusement des faces radiatives principales 66 qui s'étendent dans des plans perpendiculaires les première 7 et seconde 8 faces.

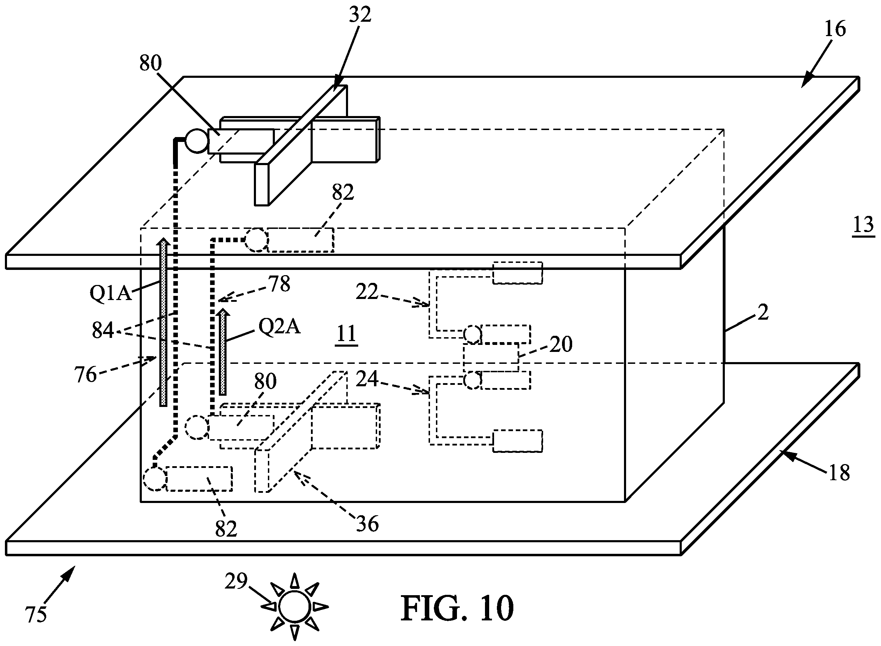

Le second mode de réalisation de l'invention de l'engin spatial 75, illustré sur les figures 10 à 12, est similaire au premier mode de réalisation de l'invention à l'exception du fait que, dans ce second mode de réalisation, le premier 76 et le second 78 dispositifs de transfert thermique auxiliaires sont réversibles ou dit autrement bidirectionnels.

Les éléments du second mode de réalisation identiques ou similaires aux éléments du premier mode de réalisation porteront les mêmes références et ne seront pas décrits une seconde fois.

Le premier dispositif de transfert thermique auxiliaire 76 du second mode de réalisation de l'invention comporte un premier échangeur de chaleur 80 en contact thermique avec le premier radiateur auxiliaire 32, un second échangeur de chaleur 82 en contact thermique avec la face interne du second radiateur 18, et des caloducs 84 (de l'anglais « heat pipe (HP)») reliant le premier échangeur de chaleur 80 au second échangeur de chaleur 82. Des boucles fluides réversibles, notamment des boucles fluides capillaires dans lesquelles le réservoir à fluide est intégré dans l'évaporateur (en l'anglais « Loop Heat Pipe ») réversibles peuvent être utilisées.

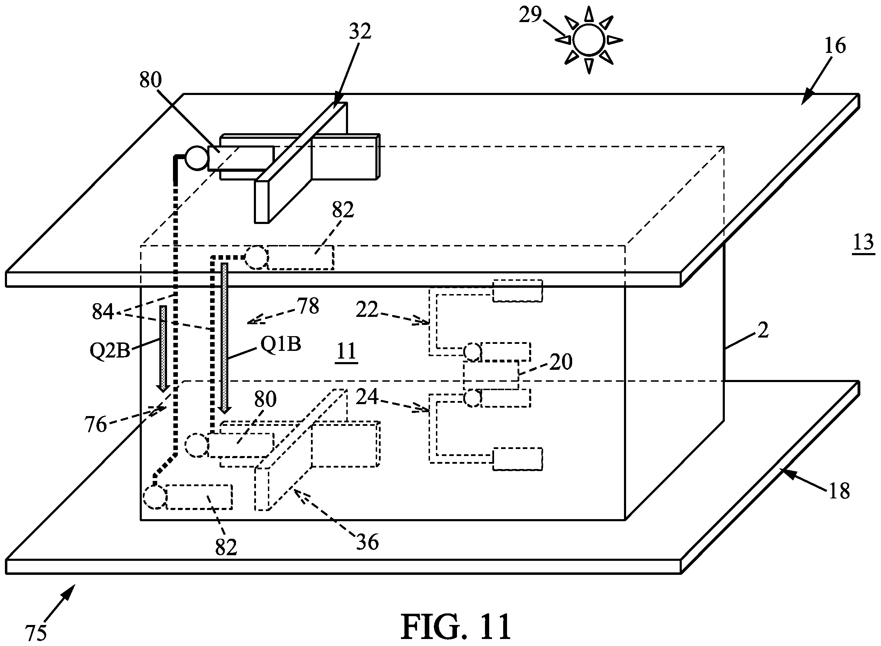

Le premier échangeur de chaleur 80 et le second échangeur de chaleur 82 sont propres à fonctionner en tant qu'évaporateur ou en tant que condenseur. Sur les figures 10 et 11, les premier 80 et second 82 échangeurs de chaleur ont été représentés par un cercle et un rectangle.

Les éléments constitutifs du second dispositif de transfert thermique auxiliaire 78 sont identiques aux éléments constitutifs du premier dispositif de transfert thermique auxiliaire 76 et ne seront pas décrits en détail.

Le premier échangeur de chaleur 80 du second dispositif de transfert thermique auxiliaire 78 est en contact thermique avec le second radiateur auxiliaire 36. Le second échangeur de chaleur du second dispositif de transfert thermique auxiliaire est en contact thermique avec la face interne du premier radiateur 16.

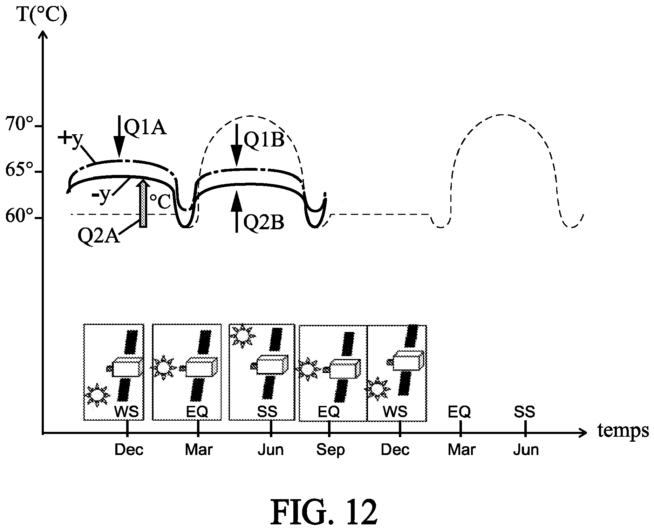

En référence aux figures 10 et 12, l'ensemble premier radiateur auxiliaire 32 et premier dispositif de transfert thermique auxiliaire 76 du second mode de réalisation de l'invention, assure au cours du solstice d'hiver la même fonction que l'ensemble premier radiateur auxiliaire 32 et premier dispositif de transfert thermique auxiliaire 34 du premier mode de réalisation de l'invention à savoir refroidir le second radiateur 18. Cet ensemble assure de plus, au cours du solstice d'hiver, une fonction supplémentaire de réchauffement du premier radiateur 16 par transfert d'une quantité d'énergie Q2A du second radiateur auxiliaire 36 vers la face principale interne 15 du premier radiateur.

Comme visible sur la figure 12, cette fonction de réchauffement permet de diminuer encore plus les écarts de température entre les première 7 et seconde 8 faces au cours du solstice d'hiver.

De la même façon, en référence aux figures 11 et 12, l'ensemble second radiateur auxiliaire 36 et second dispositif de transfert thermique auxiliaire 78 du second mode de réalisation de l'invention, assure la même fonction que l'ensemble second radiateur auxiliaire 36 et second dispositif de transfert thermique auxiliaire 78 du premier mode de réalisation de l'invention à savoir refroidir le premier radiateur 16. Cet ensemble assure de plus une fonction de réchauffement du second radiateur 18 par transfert d'une quantité d'énergie Q2B du premier radiateur auxiliaire 32 vers la face principale interne 21 du second radiateur.

Comme visible sur la figure 12, cette fonction de réchauffement permet de diminuer les écarts de températures entre les première 7 et seconde 8 faces au cours du solstice d'été.

Avantageusement, dans ce second mode de réalisation, les premier et second radiateurs auxiliaires sont recouverts ou peints d'un revêtement à forte absorptivité solaire et forte émissivité infra-rouge , par exemple d'une peinture noire afin qu'ils puissent absorber le maximum de chaleur lorsqu'ils sont exposées aux rayonnements solaires pour pouvoir réchauffer le plus possible le radiateur principal situé à l'ombre tout en ayant de bonnes capacités de réjection thermique lorsqu'ils sont à l'ombre L'homme du métier (qui est un thermicien du spatial) connait bien ce type de matériau, qui ont en général une absorptivité solaire bien supérieure à 0.8, et une émissivité infrarouge bien supérieure à 0.6 en début de vie.

Dans la présente description pour des raisons de simplification, la face Nord a été appelée première face et le radiateur Nord a été appelé premier radiateur. Toutefois, le fonctionnement du dispositif selon l'invention est symétrique de sorte que la face Sud peut également être appelée première face et le radiateur Sud peut également être appelé premier radiateur.

## Revendications

1. Engin spatial (1, 75) comprenant :
- un boitier (2) délimitant un espace intérieur (11) et un espace extérieur (13), le boitier (2) ayant une première face (7) et une seconde face (8) opposée à la première face (7),
- un premier radiateur (16) et un second radiateur (18) portés par la première face (7) et respectivement la seconde face (8), le premier radiateur (16) et le second radiateur (18) comportant chacun une face principale interne (15, 21), une face principale externe (17, 23) opposée à la face principale interne (15, 21) et des faces latérales (19, 25),
**caractérisé en ce que** l'engin spatial (1) comporte en outre un premier radiateur auxiliaire (32) et un premier dispositif de transfert thermique auxiliaire (34, 76) reliant thermiquement ledit premier radiateur auxiliaire (32) à la face principale interne (21) du second radiateur (18), le premier radiateur auxiliaire (32) étant agencé dans une première portion (46) de l'espace extérieur (13), ladite première portion (46) étant délimitée par la face principale externe (17) du premier radiateur et par des premiers plans (48, 50, 52, 54) contenant les faces latérales (19) du premier radiateur.

2. Engin spatial (1, 75) selon la revendication 1, dans lequel ledit premier radiateur auxiliaire (32) est isolé thermiquement du premier radiateur (16).

3. Engin spatial (75) selon l'une quelconque des revendications 1 et 2, qui comporte un second radiateur auxiliaire (36) et un second dispositif de transfert thermique auxiliaire (78) reliant thermiquement ledit second radiateur auxiliaire (36) à la face principale interne (15) du premier radiateur (16) ; ledit second radiateur auxiliaire (36) étant agencé dans une seconde portion (56) d'espace extérieur (13) délimitée par la face principale externe (23) du second radiateur (18) et par des seconds plans (58, 60, 62, 64) contenant les faces latérales (23) du second radiateur (18), et dans lequel le premier dispositif de transfert thermique auxiliaire (76) et le second dispositif de transfert thermique auxiliaire (78) sont réversibles.

4. Engin spatial (75) selon la revendication 3, dans lequel l'un au moins parmi le premier radiateur auxiliaire (32) et le deuxième radiateur auxiliaire (36), est recouvert d'un revêtement à forte absorptivité solaire et forte émissivité infra-rouge, par exemple de la peinture noire.

5. Engin spatial (1, 75) selon l'une quelconque des revendications 3 et 4, dans lequel l'un au moins parmi le premier radiateur auxiliaire (32) et le deuxième radiateur auxiliaire (36) comprend au moins une face radiative principale (66) qui s'étend selon une direction perpendiculaire à la face principale externe (23) du premier radiateur.

6. Engin spatial (1, 75) selon l'une quelconque des revendications 1 à 5, dans lequel le premier radiateur auxiliaire (32) comprend au moins deux plaques (68, 70, 72) qui se croisent.

7. Engin spatial (1,75) selon l'une quelconque des revendications 1 à 5, dans lequel le premier radiateur auxiliaire (32) présente la forme générale d'une section de cylindrique ouverte à chacune de ses extrémités.

8. Engin spatial (1, 75) selon l'une quelconque des revendications 1 à 5, dans lequel le premier radiateur auxiliaire (32) présente la forme générale d'un parallélépipède ouvert à chacune de ses extrémités.

9. Engin spatial (1) selon l'une quelconque des revendications 1 à 8, dans lequel le premier dispositif de transfert thermique (34) est non réversible.

10. Engin spatial (1, 75) selon l'une quelconques des revendications 1 à 9, dans lequel le premier radiateur auxiliaire (32) est réalisé dans un matériau flexible.

11. Engin spatial (1, 75) selon la revendication 10, dans lequel le premier radiateur auxiliaire (32) est réalisé en graphoil.

## Patentansprüche

1. Raumfahrzeug (1, 75), aufweisend:
- ein Gehäuse (2), das einen Innenraum (11) und einen Außenraum (13) abgrenzt, wobei das Gehäuse (2) eine erste Fläche (7) und eine der ersten Fläche (7) gegenüberliegende zweite Fläche (8) hat,
- einen ersten Radiator (16) und einen zweiten Radiator (18), die von der ersten Fläche (7) bzw. der zweiten Fläche (8) getragen werden, wobei der erste Radiator (16) und der zweite Radiator (18) jeweils eine innere Hauptfläche (15, 21), eine der inneren Hauptfläche (15, 21) gegenüberliegende äußere Hauptfläche (17, 23) und Seitenflächen (19, 25) aufweisen,
**dadurch gekennzeichnet, dass** das Raumfahrzeug (1) ferner einen ersten Hilfsradiator (32) und eine erste Wärmetransfer-Hilfsvorrichtung (34, 76) aufweist, die den ersten Hilfsradiator (32) mit der inneren Hauptfläche (21) des zweiten Radiators (18) thermisch verbindet, wobei der erste Hilfsradiator (32) in einem ersten Abschnitt (46) des Außenraums (13) angeordnet ist, wobei der erste Abschnitt (46) von der äußeren Hauptfläche (17) des ersten Radiators und von ersten Ebenen (48, 50, 52, 54), die die Seitenflächen (19) des ersten Radiators enthalten, begrenzt wird.

2. Raumfahrzeug (1, 75) nach Anspruch 1, in welchem der erste Hilfsradiator (32) von dem ersten Radiator (16) thermisch isoliert ist.

3. Raumfahrzeug (75) nach einem der Ansprüche 1 und 2, das einen zweiten Hilfsradiator (36) und eine zweite Wärmetransfer-Hilfsvorrichtung (78) aufweist, die den zweiten Hilfsradiator (36) mit der inneren Hauptfläche (15) des ersten Radiators (16) thermisch verbindet; wobei der zweite Hilfsradiator (36) in einem zweiten Abschnitt (56) des Außenraums (13) angeordnet ist, der von der äußeren Hauptfläche (23) des zweiten Radiators (18) und von zweiten Ebenen (58, 60, 62, 64), die die Seitenflächen (23) des zweiten Radiators (18) enthalten, begrenzt wird, und in welchem die erste Wärmetransfer-Hilfsvorrichtung (76) und die zweite Wärmetransfer-Hilfsvorrichtung (78) reversibel sind.

4. Raumfahrzeug (75) nach Anspruch 3, in welchem der erste Hilfsradiator (32) und/oder der zweite Hilfsradiator (36) mit einer Beschichtung, die ein starkes solares Absorptionsvermögen und ein starkes Infrarot-Emissionsvermögen hat, beispielsweise mit einem schwarzen Anstrich, überzogen ist.

5. Raumfahrzeug (1, 75) nach einem der Ansprüche 3 und 4, in welchem der erste Hilfsradiator (32) und/oder der zweite Hilfsradiator (36) mindestens eine strahlende Hauptfläche (66) aufweist, die sich in eine Richtung erstreckt, die senkrecht zur äußeren Hauptfläche (23) des ersten Radiators ist.

6. Raumfahrzeug (1, 75) nach einem der Ansprüche 1 bis 5, in welchem der erste Hilfsradiator (32) mindestens zwei sich kreuzende Platten (68, 70, 72) aufweist.

7. Raumfahrzeug (1, 75) nach einem der Ansprüche 1 bis 5, in welchem der erste Hilfsradiator (32) die allgemeine Form eines an jedem seiner Enden offenen Zylinderabschnitts hat.

8. Raumfahrzeug (1, 75) nach einem der Ansprüche 1 bis 5, in welchem der erste Hilfsradiator (32) die allgemeine Form eines an jedem seiner Enden offenen Parallelepipeds hat.

9. Raumfahrzeug (1) nach einem der Ansprüche 1 bis 8, in welchem die erste Wärmetransfer-Hilfsvorrichtung (34) nicht reversibel ist.

10. Raumfahrzeug (1, 75) nach einem der Ansprüche 1 bis 9, in welchem, der erste Hilfsradiator (32) aus einem flexiblen Material hergestellt ist.

11. Raumfahrzeug (1, 75) nach Anspruch 10, in welchem der erste Hilfsradiator (32) aus Graphoil hergestellt ist.

## Claims

1. Spacecraft (1, 75) comprising:
- a housing (2) defining an inner space (11) and an outer space (13), the housing (2) having a first surface (7) and a second surface (8) opposite the first surface (7),
- a first radiator (16) and a second radiator (18) supported by the first surface (7) and respectively the second surface (8), the first radiator (16) and the second radiator (18) each comprising a main inner surface (15, 21), a main outer surface (17, 23) opposite the main inner surface (15, 21) and side surfaces (19, 25),
**characterised in that** the spacecraft (1) further comprises a first auxiliary radiator (32) and a first auxiliary heat-transfer device (34, 76) thermally connecting said first auxiliary radiator (32) to the main inner surface (21) of the second radiator (18), the first auxiliary radiator (32) being arranged in a first portion (46) of the outer space (13), said first portion (46) being defined by the main outer surface (17) of the first radiator and by the first planes (48, 50, 52, 54) containing the side surfaces (19) of the first radiator.

2. Spacecraft (1, 75) according to claim 1, wherein said first auxiliary radiator (32) is thermally insulated from the first radiator (16).

3. Spacecraft (75) according to any of claims 1 and 2, which comprises a second auxiliary radiator (36) and a second auxiliary heat-transfer device (78) thermally connecting said second auxiliary radiator (36) to the main inner surface (15) of the first radiator (16); said second auxiliary radiator (36) being arranged in a second portion (56) of the outer space (13) defined by the main outer surface (23) of the second radiator (18) and by second planes (58, 60, 62, 64) containing the side surfaces (23) of the second radiator (18), and wherein the first auxiliary heat-transfer device (76) and the second auxiliary heat-transfer device (78) are reversible.

4. Spacecraft (75) according to claim 3, wherein the one at least from the first auxiliary radiator (32) and the second auxiliary radiator (36), is covered with a covering with a high solar absorption coefficient and a high infrared emissivity, for example black paint.

5. Spacecraft (1, 75) according to any of claims 3 and 4, wherein the one at least from the first auxiliary radiator (32) and the second auxiliary radiator (36) comprises at least one main radiative surface (66) which extends according to a direction perpendicular to the main outer surface (23) of the first radiator.

6. Spacecraft (1, 75) according to any of claims 1 to 5, wherein the first auxiliary radiator (32) comprises at least two plates (68, 70, 72) that cross.

7. Spacecraft (1, 75) according to any of claims 1 to 5, wherein the first auxiliary radiator (32) has the general shape of a cylindrical section open at each one of its ends.

8. Spacecraft (1, 75) according to any of claims 1 to 5, wherein the first auxiliary radiator (32) has the general shape of a parallelepiped open at each one of its ends.

9. Spacecraft (1) according to any of claims 1 to 8, wherein the first heat-transfer device (34) is not reversible.

10. Spacecraft (1, 75) according to any of claims 1 to 9, wherein the first auxiliary radiator (32) is made from a flexible material.

11. Spacecraft (1, 75) according to claim 10, wherein the first auxiliary radiator (32) is made from graphoil.
